# FASCICULE DE BREVET EUROPEEN

(11) **EP 2 237 944 B1**
(45) Date de publication et mention de la délivrance du brevet: **21.09.2011**
(21) Numéro de dépôt: 09706335.8
(22) Date de dépôt: 29.01.2009
(51) Int. Cl.: B29C 70/44, B29C 33/68, B29C 70/34, B29L 31/30

(54) **DISPOSITIF POUR LA FABRICATION D'UNE PIECE EN MATERIAU COMPOSITE COMPRENANT DES TOLES DE LISSAGE A JONCTIONS GLISSANTES ET PROCEDE DE FABRICATION DE TOLES DE LISSAGE A JONCTIONS GLISSANTES**
VORRICHTUNG ZUR HERSTELLUNG EINES TEILS AUS EINEM VERBUNDSTOFF MIT GLÄTTUNGSPLATTEN MIT GLEITVERBINDUNGEN UND VERFAHREN ZUR HERSTELLUNG VON GLÄTTUNGSPLATTEN MIT GLEITVERBINDUNGEN
DEVICE FOR THE MANUFACTURE OF A PART MADE OF A COMPOSITE COMPRISING SMOOTHING PLATES HAVING SLIDING JUNCTIONS AND METHOD OF MANUFACTURING SMOOTHING PLATES HAVING SLIDING JUNCTIONS

(30) Priorité: 31.01.2008 FR 0850609
(43) Date de publication de la demande: 13.10.2010
(73) Titulaire: Airbus Opérations SAS, 31060 Toulouse (FR)
(72) Inventeur: BOYELDIEU, Aurélien, F-44230 Saint Sébastien (FR)
(74) Mandataire: Fantin, Laurent
(86) Numéro de dépôt international: PCT/FR2009/050132
(87) Numéro de publication internationale: WO 2009/095619

(56) Documents cités:
- WO-A-98/32589
- FR-A- 1 338 785
- FR-A- 2 710 871

## Description

La présente invention se rapporte à un dispositif pour la fabrication d'une pièce en matériau composite comprenant des tôles de lissage à jonctions glissantes ainsi qu'à un procédé de réalisation de tôles de lissage à jonctions glissantes.

La construction aéronautique tend à recourir aux matériaux composites pour la réalisation de certaines parties d'un aéronef, notamment les panneaux formant la peau externe du fuselage, afin de réduire la masse embarquée. Le document WO-A-98/32589 décrit un dispositif pour la fabrication d'un fuselage d'aéronef en matériau composite selon le préambule de la revendication 1. Le document FR-A-2 710 871 décrit un procédé de fabrication d'au moins une tôle de lissage selon le préambule de la revendication 6.

Les pièces réalisées en matériau composite comprennent une matrice en résine renforcée par des fibres. Selon un mode de réalisation répandu, les fibres se présentent sous la forme d'un ou plusieurs pli(s) tissé(s) ou non, pré-imprégné(s) de résine. En variante, les fibres peuvent ne pas être pré-imprégnées. Dans ce cas, on utilise au moins un film de résine.

Pour assurer la consolidation de la pièce en matériau composite, il est nécessaire d'augmenter la température pour obtenir la polymérisation de la résine. On exerce une pression lors de la polymérisation afin de chasser l'air et les solvants, pour réduire la porosité et pour éviter les risques de défauts susceptibles de réduire les caractéristiques mécaniques de la pièce.

Dans le cas d'une partie du fuselage, la pièce en composite est drapée sur un moule mâle et recouverte par une vessie de compactage.

Des moyens de drainage, sous la forme d'un tissu drainant, sont intercalés entre la pièce et la vessie.

Selon ce mode opératoire, la surface qui n'est pas en contact avec le moule correspond à la surface extérieure du fuselage. Or, en contact avec des flux aérodynamiques importants, cette surface doit avoir un état de surface conférant à l'aéronef les meilleures caractéristiques aérodynamiques. En effet, les défauts de surface engendrent une augmentation de la traînée et par conséquent une augmentation de la consommation énergétique de l'appareil.

Afin de conformer la face de la pièce qui n'est pas en contact avec le moule, une tôle, appelée tôle de lissage, est placée entre la pièce et la vessie. Elle permet d'une part, d'obtenir la santé, la rugosité, l'aspect de surface et la tenue des tolérances aérodynamiques requises, et d'autre part, d'homogénéiser la répartition des efforts de pression exercés par la vessie à la surface de la pièce. Dans le cas d'un panneau de fuselage, la surface extérieure en contact avec la tôle de lissage n'est pas plate mais courbe et peut s'étendre sur 360° dans le cas d'un tronçon de fuselage. Dans ce cas, l'outillage comprend généralement plusieurs tôles de lissage mises bout à bout.

Lors de la polymérisation, la pièce en matériau composite va diminuer d'épaisseur, ce qui se traduit par une réduction dimensionnelle de la surface de contact avec les tôles de lissage. Ce phénomène est appelé défoisonnement.

Malgré ce phénomène, les tôles de lissage doivent transmettre une pression homogène tout au long de la polymérisation.

Compte tenu de cette réduction dimensionnelle, par exemple de l'ordre de 9 mm pour un diamètre de 2 m, les tôles de lissage ne sont pas jointives avant la polymérisation.

Selon une première variante, les tôles de lissage ont une jonction de type bord à bord ou en escalier.

Dans ce cas, la mise en pression intervenant avant la fin du défoisonnement, un amas de résine se forme au niveau des espaces laissés au niveau de chaque jonction, donnant lieu à une ligne de marquage au niveau de la surface extérieure ainsi réalisée.

Selon une autre variante, pour chaque jonction, les bords des tôles de lissage en vis-à-vis, comprennent des fils libres implantés de manière alternée d'une tôle à l'autre entre les deux tôles.

Bien que cette solution assure un recouvrement quasi complet de la surface à tout moment, la souplesse des fils ne permet pas la mise en pression au droit des f ils, ce qui se traduit par un marquage des f ils dans la pièce après polymérisation. Aussi, la présente invention vise à pallier les inconvénients de l'art antérieur en proposant un dispositif pour la fabrication d'une pièce en matériau composite comprenant des tôles de lissage permettant d'obtenir une pièce ayant les caractéristiques requises en matière d'aérodynamisme.

A cet effet, l'invention a pour objet un dispositif pour la fabrication d'une partie d'un aéronef en matériau composite dont une surface est susceptible d'être en contact avec des écoulements aérodynamiques, ledit dispositif comprenant d'une part un moule mâle et d'autre part au moins deux de lissage susceptibles d'exercer une pression sur la pièce à réaliser lors d'une phase de polymérisation durant laquelle apparait un phénomène de défoisonnement, caractérisé en ce qu'au moins une des deux tôles de lissage comprend un chant lisse avec une forme en biseau contre lequel au moins une surface de l'autre tôle de lissage peut glisser pour compenser le phénomène de défoisonnement.

Le défoisonnement du matériau intervenant au plus tard au moment où la résine atteint sa viscosité minimale, l'apparition de marquage n'est plus possible car il n'existe plus d'interstice entre les tôles de lissage grâce à la forme d'au moins un des chants.

D'autres caractéristiques et avantages ressortiront de la description qui va suivre de l'invention, description donnée à titre d'exemple uniquement, en regard des dessins annexés sur lesquels :
- la figure 1 est une vue en perspective d'un outillage utilisé pour réaliser une partie de fuselage d'un aéronef en matériau composite,
- la figure 2 est une coupe illustrant la jonction de tôles de lissage selon l'invention,
- la figure 3 est une coupe illustrant en détails la jonction de la figure 2, et
- la figure 4 est une coupe illustrant le procédé de réalisation de tôles de lissage à jonctions glissantes.

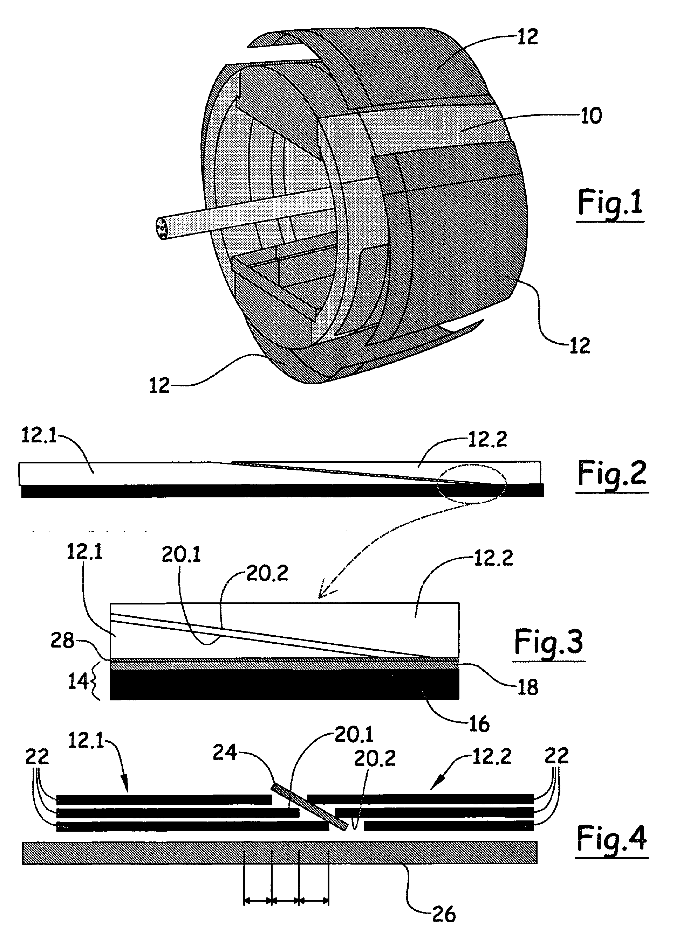

Sur la figure 1, on a représenté une partie d'un l'outillage pour réaliser une partie du fuselage d'un aéronef comprenant un moule mâle 10 ainsi qu'au moins deux tôles de lissage 12. Les autres parties de l'outillage, à savoir, la vessie, les moyens d'étanchéité, les moyens pour créer une dépression et les moyens de drainage ne sont pas représentés et décrits car ils sont connus de l'homme du métier.

Sur les figures 2 et 3, on a représenté en 14 une pièce en matériau composite comprenant une matrice en résine renforcée par des fibres. Selon un mode de réalisation répandu, les fibres se présentent sous la forme d'un ou plusieurs pli(s) 16 tissé(s) ou non, pré-imprégné(s) de résine. En variante, les fibres peuvent ne pas être pré-imprégnées. Dans ce cas, on utilise au moins un film de résine 18. Un procédé de fabrication d'une pièce en matériau composite consiste à draper au moins un pli de fibres 16 pré-imprégnées ou au moins un pli de fibres 16 non imprégnées et au moins un film de résine 18 sur le moule mâle de forme convexe et à mettre en place les autres parties de l'outillage et plus particulièrement les tôles de lissage 12. Pour assurer la consolidation de la pièce en matériau composite, il est nécessaire d'augmenter la température pour obtenir la polymérisation de la résine et d'exercer une pression lors de la polymérisation afin de chasser l'air et les solvants pour réduire les risques de défauts susceptibles de réduire les caractéristiques mécaniques de la pièce.

Cette pression sur la pièce est exercée notamment par les tôles de lissage 12. Lors de la polymérisation, la pièce en matériau composite va diminuer d'épaisseur, ce qui se traduit par une réduction d'au moins une dimension de la surface de contact avec les tôles de lissage 12. Ce phénomène est appelé défoisonnement. Selon l'invention, l'outillage comprend au moins deux tôles de lissage 12.1 et 12.2 dont les chants 20.1 et 20.2 en vis-à-vis sont lisses et ont des formes en biseau qui coopèrent. L'angle entre le chant et la tangente à la surface de contact est inférieur à 5° et de préférence inférieur à 1°.

Avantageusement, les tôles de lissage ont une épaisseur faible comprise entre 1 et 2 mm, leur conférant une flexibilité, notamment au niveau de la forme en biseau. Cette épaisseur est ajustée en fonction du rayon de courbure de moule de manière à ce que la tôle de lissage puisse facilement épouser ce rayon. Ainsi, plus le rayon de courbure du moule est faible et plus l'épaisseur des tôles de lissage est faible.

Selon une variante simplifiée, au niveau d'une jonction de deux tôles de lissage, seulement un chant est lisse et a une forme en biseau, au moins une surface de l'autre tôle de lissage, notamment la surface en contact avec la pièce à réaliser, glissant sur ledit chant.

La combinaison d'un angle faible au niveau d'au moins un des bords jointifs et d'une flexibilité des tôles de lissage permet un contact permanent pendant la période de glissement, ce qui permet d'éviter les amas de résine au niveau de la jonction entre les tôles de lissage. Ainsi, le défoisonnement du matériau intervenant au plus tard au moment où la résine atteint sa viscosité minimale, l'apparition de marquage n'est plus possible car il n'existe plus d'interstice entre les tôles de lissage grâce aux formes des chants.

Cette configuration permet d'obtenir également une mise en pression homogène et de limiter les risques de défauts de surface.

Plus l'angle est faible et plus la mise en pression est homogène. Cependant, il est nécessaire de trouver un bon compromis entre la fragilité de cette fine épaisseur et la rigidité de la tôle de lissage.

Selon un mode de réalisation, les tôles de lissage 12.1 et 12.2 sont obtenues par l'empilage de plis 22 de fibres noyées dans une résine. Pour obtenir la forme en biseau, on réalise des lâchés de plis à savoir les plis sont disposés de manière adaptée pour obtenir une forme en escalier au niveau du chant comme illustré sur la figure 4.

Pour obtenir un chant lisse, on dispose avant la polymérisation de la résine un clinquant 24 rigide avec une surface lisse susceptible d'être en contact avec le chant à conformer.

Avantageusement, les tôles de lissage 12.1 et 12.2 jointives sont réalisées lors de la même opération de polymérisation. Ainsi comme illustré sur la figure 4, les plis de chaque tôle sont empilés les uns sur les autres sur un moule 26, les plis étant positionnés de manière à obtenir des pentes complémentaires pour les chants 20.1 et 20.2 en vis-à-vis. Pour obtenir des chants lisses, un clinquant 24 fin et rigide dont les surfaces opposées en contact avec les chants sont parallèles et lisses est intercalé entre lesdits chants.

Après polymérisation, on retire le clinquant de manière à obtenir des chants lisses.

L'utilisation d'un clinquant permet d'obtenir un aspect glacé de la résine au niveau de l'interface et ainsi de réduire le coefficient de frottement permettant un glissement facile des deux chants l'un contre l'autre malgré la pression.

Selon une autre caractéristique de l'invention, un film d'arrachage 28 est intercalé entre les tôles de lissage et la pièce à réaliser au moins au niveau des zones de jonction entre les tôles de lissage. Ce tissu d'arrachage 28 forme une barrière pour la résine et éventuellement les fibres avant le défoisonnement, lorsque la résine a une viscosité maximale. Ainsi, ce tissu d'arrachage 28 empêche des éléments de venir se glisser dans l'interstice existant avant le défoisonnement.

Enfin, l'écartement initial entre les tôles de lissage est fonction de la réduction dimensionnelle découlant du phénomène de défoisonnement et du nombre de jonctions. Ainsi, il est possible de réduire les défauts de surface en augmentant le nombre de tôles de lissage et par conséquent le nombre de jonctions. Cependant, un nombre trop élevé de tôles de lissage conduit à un procédé compliqué à mettre en oeuvre. Ainsi, on ajustera le nombre de tôles de lissage de manière à obtenir un compromis entre ces deux contraintes.

## Revendications

1. Dispositif pour la fabrication d'une partie d'un aéronef en matériau composite dont une surface est susceptible d'être en contact avec des écoulements aérodynamiques, ledit dispositif comprenant d'une part un moule mâle (10) et d'autre part au moins deux tôles de lissage (12) susceptibles d'exercer une pression sur la pièce à réaliser lors d'une phase de polymérisation durant laquelle apparait un phénomène de défoisonnement, **caractérisé en ce qu'**au moins une des deux tôles de lissage (12.1, 12.2) comprend un chant lisse avec une forme en biseau contre lequel au moins une surface de l'autre tôle de lissage peut glisser pour compenser le phénomène de défoisonnement.

2. Dispositif pour la réalisation d'une partie d'un aéronef en matériau composite selon la revendication 1, **caractérisé en ce que** lesdites au moins deux tôles de lissage (12.1, 12.2) ont des chants (20.1, 20.2) en vis-à-vis lisses avec des formes en biseau qui coopèrent de manière à glisser l'un par rapport l'autre.

3. Dispositif pour la réalisation d'une partie d'un aéronef en matériau composite selon la revendication 1 ou 2, **caractérisé en ce que** le chant en biseau forme un angle inférieur à 5° et de préférence inférieur à 1°.

4. Dispositif pour la réalisation d'une partie d'un aéronef en matériau composite selon l'une quelconque des revendications 1 à 3, **caractérisé en ce que** les tôles de lissage ont une épaisseur faible comprise entre 1 et 2 mm, leur conférant une flexibilité.

5. Dispositif pour la réalisation d'une partie d'un aéronef en matériau composite selon l'une quelconque des revendications précédentes, **caractérisé en ce qu'**il comprend un film d'arrachage (28) intercalé entre les tôles de lissage et la pièce à réaliser au moins au niveau des zones de jonction entre les tôles de lissage.

6. Procédé de réalisation d'au moins une tôle de lissage susceptible d'être intégrée dans un dispositif pour la fabrication d'une pièce en matériau composite selon l'une quelconque des revendications 1 à 5, **caractérisé en ce qu'**il consiste à empiler des plis (22) de fibres en réalisant des lâchés de plis de manière à obtenir au niveau d'un chant une forme en escalier, à placer un clinquant (24) avec une surface lisse en contact avec ledit chant, à polymériser ladite au moins une tôle de lissage et à retirer ledit clinquant (24) pour obtenir un chant lisse avec une forme en biseau.

7. Procédé de réalisation de deux tôle de lissage selon la revendication 6, **caractérisé en ce qu'**il consiste à empiler pour chaque tôle des plis (22) de fibres de manière à obtenir des pentes complémentaires pour les chants 20.1 et 20.2 en vis-à-vis, à intercaler entre les chants un clinquant (24) dont les surfaces opposées en contact avec les chants sont parallèles et lisses, à polymériser lesdites tôles de lissage et à retirer ledit clinquant (24) pour obtenir des chants en vis-à-vis lisses avec une forme en biseau.

## Claims

1. Device for the production of a part of an aircraft made of composite material of which one surface is able to be in contact with aerodynamic flows, whereby said device comprises, on the one hand, a male mold (10), and, on the other hand, at least two smoothing panels (12) that can exert pressure on the piece to be produced during a polymerization phase during which a contraction phenomenon appears, **characterized in that** at least one of the two smoothing panels (12.1, 12.2) comprises a smooth edge with a beveled shape against which at least one surface of the other smoothing panel can slide to compensate for the contraction phenomenon.

2. Device for the production of a part of an aircraft made of composite material according to claim 1, wherein said at least two smoothing panels (12.1, 12.2) have smooth opposite edges (20.1, 20.1) with beveled shapes that work together so as to slide relative to one another.

3. Device for the production of a part of an aircraft made of composite material according to claim 1 or 2, wherein the beveled edge forms an angle that is less than 5° and preferably less than 1°.

4. Device for the production of a part of an aircraft made of composite material according to any of claims 1 to 3, wherein the smoothing panels have a slight thickness of between 1 and 2 mm, giving them flexibility.

5. Device for the production of a part of an aircraft made of composite material according to any of the preceding claims, wherein it comprises a tear-away film (28) that is inserted between the smoothing panels and the part to be produced at least at the junction zones between the smoothing panels.

6. Process for the production of at least one smoothing panel that can be integrated in a device for the production of a composite material piece according to any of claims 1 to 5, wherein it consists in stacking folds (22) of fibers by implementing releases of folds so as to obtain a stair shape at one edge, to place a shim (24) with a smooth surface in contact with said edge, to polymerize said at least one smoothing panel, and to withdraw said shim (24) to obtain a smooth edge with a beveled shape.

7. Process for the production of two smoothing panels according to claim 6, wherein it consists in stacking, for each panel, folds (22) of fibers so as to obtain complementary slopes for the opposite edges 20.1 and 20.2, in inserting between the edges a shim (24) whose opposite surfaces in contact with the edges are parallel and smooth, in polymerizing said smoothing panels, and in withdrawing said shim (24) to obtain smooth opposite edges with a beveled shape.

## Patentansprüche

1. Vorrichtung für die Herstellung eines Teils eines Flugzeugs aus Verbundwerkstoff, von welchem eine Fläche geeignet ist, mit aerodynamischen Strömungen in Kontakt zu sein, wobei die Vorrichtung einerseits eine positive Form (10) und andererseits wenigstens zwei Glättungsbleche (12) umfasst, die geeignet sind, während einer Polymerisationsphase, während derer es zu einem Abschwellphänomen kommt, auf das herzustellende Teil einen Druck auszuüben, **dadurch gekennzeichnet, dass** wenigstens eines der beiden Glättungsbleche (12.1, 12.2) eine glatte Kante mit einer abgeschrägten Form aufweist, an der wenigstens eine Fläche des anderen Glättungsblechs gleiten kann, um das Abschwellphänomen zu kompensieren.

2. Vorrichtung für die Herstellung eines Teils eines Flugzeugs aus Verbundwerkstoff nach Anspruch 1, **dadurch gekennzeichnet, dass** die wenigstens zwei Glättungsbleche (12.1, 12.2) einander gegenüberliegende glatte Kanten (20.1, 20.2) mit abgeschrägten Formen aufweisen, die derart zusammenwirken, dass sie zueinander gleiten.

3. Vorrichtung für die Herstellung eines Teils eines Flugzeugs aus Verbundwerkstoff nach Anspruch 1 oder 2, **dadurch gekennzeichnet, dass** die abgeschrägte Kante einen Winkel von weniger als 5° und vorzugsweise von weniger als 1° bildet.

4. Vorrichtung für die Herstellung eines Teils eines Flugzeugs aus Verbundwerkstoff nach einem der Ansprüche 1 bis 3, **dadurch gekennzeichnet, dass** die Glättungsbleche eine geringe Dicke im Bereich zwischen 1 und 2 mm aufweisen, die ihnen eine Flexibilität verleiht.

5. Vorrichtung für die Herstellung eines Teils eines Flugzeugs aus Verbundwerkstoff nach einem der vorstehenden Ansprüche, **dadurch gekennzeichnet, dass** sie einen Abreißfilm (28) aufweist, der zwischen den Glättungsblechen und dem herzustellenden Teil wenigstens im Bereich der Verbindungsbereiche zwischen den Glättungshlechen eingefügt ist.

6. Verfahren zur Herstellung wenigstens eines Glättungsblechs, das geeignet ist, in eine Vorrichtung für die Herstellung eines Teils aus Verbundwerkstoff nach einem der Ansprüche 1 bis 5 integriert zu werden, **dadurch gekennzeichnet, dass** es darin besteht, Faserlagen (22) unter Ausbildet von unterschiedlich langen Lagen aufzuschichten, derart, dass im Bereich einer Kante eine Treppenform erhalten wird, eine Beilage (24) mit einer glatten Oberfläche in Kontakt mit der Kante anzuordnen, das wenigstens eine Glättungsblech zu polymerisierten und die Beilage (24) heraus zu nehmen, um eine glatte Kante mit einer abgeschrägten Form zu erhalten.

7. Verfahren zur Herstellung von zwei Glättungsblechen nach Anspruch 6, **dadurch gekennzeichnet, dass** es darin besteht, für jedes Blech Faserlagen (22) derart aufzuschichten, dass ergänzende Schrägen für die einander gegenüberliegenden Kanten (20.1 und 20.2) erhalten werden, zwischen den Kanten eine Beilage (24) einzufügen, deren gegenüberliegende, mit den Kanten in Kontakt befindliche Flächen parallel und glatt sind, die Glättungsbleche zu polymerisieren und die Beilage (24) heraus zu nehmen, um einander gegenüberliegende glatte Kanten mit einer abgeschrägten Form zu erhalten.
